# FASCICULE DE BREVET EUROPEEN

(11) **EP 0 605 332 B1**
(45) Date de publication et mention de la délivrance du brevet: **27.08.1997**
(21) Numéro de dépôt: 93403211.1
(22) Date de dépôt: 30.12.1993
(51) Int. Cl.: F16H 55/36, B23P 11/00

(54) **Procédé de réalisation d'éléments rotatifs et, particulièrement, de poulies à gorges multiples**
Verfahren zum Herstellen von drehbaren Teilen, insbesondere von mehrrilligen Keilriemenscheiben
Process for the production of rotary members, particularly of multiple groove pulleys

(30) Priorité: 31.12.1992 FR 9216057
(43) Date de publication de la demande: 06.07.1994
(73) Titulaire: SOCIETE FRANCAISE DE ROULEMENTS DE MANUTENTION, F-77400 Lagny (FR)
(72) Inventeur: Clabaux, Gérard, F-77400 Thorigny sur Marne (FR)

(56) Documents cités:
- EP-A- 0 143 032
- EP-A- 0 457 733
- DE-A- 2 833 458
- FR-A- 1 131 923
- GB-A- 577 390
- US-A- 2 892 431
- US-A- 3 368 376

## Description

La présente invention concerne principalement le domaine de la transmission mécanique de puissance, de force ou de mouvement mettant en jeu des éléments en rotation, ladite transmission se faisant par l'intermédiaire d'un ou plusieurs liens souples sans fin, tels que des courroies, montés entre un élément rotatif tel qu'une poulie -dite menante- reliée à un élément moteur et au moins un autre élément rotatif tel qu'une poulie -dite menée-entraînant les accessoires ou les organes auxquels sont communiqués la puissance, la force ou le mouvement à transmettre, la transmission pouvant également comporter d'autres éléments rotatifs de renvoi, tels que des poulies, des rouleaux ou des galets.

L'invention concerne aussi, dans un domaine voisin, les disques pour variateurs de vitesse.

Principalement, l'invention est relative au procédé de réalisation d'éléments rotatifs tels que des poulies pour transmission ou des disques pour variation de vitesse, comportant un moyeu sur lequel sont montés des flasques, disposés au moins aux extrémités du moyeu, perpendiculairement à son axe longitudinal pour former au moins un gorge destinée à recevoir un lien souple et, elle est, plus spécialement relative à la réalisation d'éléments rotatifs tels que des poulies pour transmission ou des disques pour variateurs de vitesse comportant plusieurs gorges formées par des flasques au nombre de trois au moins, deux desdits flasques étant montés aux extrémités du moyeu, le (ou les) autres étant monté(s) en position intermédiaire, permettant, de ce fait, l'emploi simultané d'au moins deux liens souples sans fin.

La transmission mécanique de puissance, de force ou de mouvement, entre éléments rotatifs, par l'intermédiaire de liens souples sans fin, tels que des courroies, trouve son application pour l'entraînement des accessoires comme ventilateurs, pompes à eau, alternateurs ou autres, dans les véhicules automobiles, comme, par exemple, pour l'entraînement d'accessoires ou d'outils, sur les machines tournantes à poste fixe.

On connait des techniques de fabrication de poulies à gorges multiples par emboutissage ou roulage, à partir d'une feuille métallique, comme décrit dans le brevet US 2 892 431 d'AUTOMATIC STEEL PRODUCTS ; le procédé utilise l'emboutissage au tour pour réaliser une poulie comportant deux gorges en forme de V.

Le document EP-A-0 143 032 de AUBECQ AUXI propose, lui, une technique de réalisation de poulies à gorges multiples, également en forme de V, par repoussage du métal, provoquant son fluage, qui constitue le flanc.

Pour une réalisation semblable, le document EP-A-0 156 567 de HONDA décrit une technique de compression axiale d'une paroi cylindrique, alors qu'elle est confinée, pour former une paroi épaissie.

Le brevet US 3 368 376 d'EATON YALE and TOWNE suggère la combinaison des procédés d'emboutissage au tour et de matriçage pour la fabrication de courroies à gorges multiples, également en forme de V.

Alors que pour la réalisation de poulies à gorges multiples, de formes simples, les techniques connues nécessitent l'emploi d'opérations complexes mettant en oeuvre des outillages de précision, les procédés se compliquent encore lorsqu'il s'agit de fabriquer des poulies à gorges multiples destinées à coopérer avec des courroies striées, à rainures disposées parallèlement à l'axe longitudinal ou, encore davantage, avec des courroies de type synchrone ou des courroies crantées, c'est à dire des courroies comportant, sur l'une au moins de leurs faces, des dents disposées transversalement à leur axe longitudinal.

La technique, décrite dans le document EP-A-0 457 733 de TORNOS BECHLER, permet de réaliser des flasques d'extrémités destinés à empécher le déport de la courroie crantée pendant son fonctionnement, lesdits flasques d'extrémités étant mis en place par chassage sur des surfaces coniques ménagées aux extrémités du moyeu de la poulie, puis ajustés. La technique est intéressante mais reste limitée aux flasques d'extrémités puisqu'elle nécessite la création, aux extrémités du moyeu de la poulie, de surfaces coniques pour l'engagement des flasques.

La technique généralement utilisée pour réaliser des poulies à gorges multiples pour des courroies synchrones ou crantées consiste donc à juxtaposer deux poulies individuelles, avec les problèmes que posent l'alignement des axes et la parfaite synchronisation des poulies.

La présente invention a pour objectif de proposer un procédé de réalisation d'éléments rotatifs tels que des poulies pour transmission ou des disques pour variateurs de vitesse qui apporte une solution aux inconvénients des techniques connues de l'art antérieur, c'est à dire qui soit peu coûteux à mettre en oeuvre, tant par l'emploi d'outils classiques que par la simplicité des opérations, tout en permettant la fabrication d'éléments rotatifs tels que des poulies de transmission ou des disques de variateurs de vitesse présentant la qualité et la fiabilité nécessaires pour des applications devenues de plus en plus exigeantes.

L'invention est donc un procédé de réalisation d'éléments rotatifs, particulièrement pour transmission de puissance, de force ou de mouvement ou pour variation de vitesse, lesdits éléments rotatifs étant, dans ce cas, des poulies ou des disques, destinés à recevoir au moins deux liens souples sans fin.

Les éléments rotatifs sont constitués d'un moyeu unique équipé d'un nombre de flasques égal au nombre de liens souples sans fin avec lesquels ils doivent coopérer augmenté d'une unité ; lesdits flasques comportent un alésage central et sont montés perpendiculairement à l'axe longitudinal dudit moyeu unique, deux flasques consécutifs définissant entre eux et avec la surface externe du moyeu unique une gorge destinée à recevoir un lien souple sans fin, lesdits flasques ayant pour but d'éviter le déport desdits liens souples sans fin, en cours de fonctionnement, sous l'effet de forces latérales dues, par exemple, à l'alignement imparfait des éléments rotatifs entre eux lors de la transmission de force, de puissance ou de mouvement à des organes localisés à des endroits différents de l'installation. Lesdits flasques sont disposés dans des rainures circonférentielles d'insertion, usinées à la surface externe dudit moyeu unique, dont la profondeur est faible en regard du diamètre externe dudit moyeu unique. Après mise en place desdits flasques, le diamètre final de leur alésage central est inférieur au diamètre externe du moyeu unique.

L'invention est caractérisée en ce que les flasques intermédiaires sont constitués de disques monoblocs de forme appropriée et en ce qu'ils sont rendus solidaires du fond des rainures circonférentielles d'insertion par un rétreint radial, opération mécanique de solidarisation destinée à réduire le diamètre initial de leur alésage central.

Une des particularités de l'invention réside dans son adaptabilité à la réalisation d'éléments rotatifs à gorges multiples dont les profils de gorge sont conjugués à celui des liens souples sans fin qui viennent y prendre place, que ce profil soit parallélépipédique, trapézoïdal, strié ou qu'il comporte des crans ou des dents d'entraînement.

Une autre caractéristique de l'invention réside dans le fait que le procédé mécanique de solidarisation de chacun des flasques au moyeu unique, au fond des rainures circonférentielles d'insertion, se fait sans apport de matière, c'est-à-dire sans soudure ni collage, mais par rétreint radial.

Une autre caractéristique de l'invention réside dans la possibilité de réaliser, simultanément, plusieurs poulies à gorges multiples sur un même moyeu unique, la réalisation de poulies à gorges multiples individuelles se faisant par simple découpe aux endroits voulus.

L'invention sera mieux comprise à la lecture de la description accompagnant les dessins, dans lesquels :
- la figure 1 représente une poulie pour deux courroies plates, réalisées selon les techniques de l'art antérieur, par juxtaposition de deux poulies élémentaires à gorge simple ;
- la figure 2 illustre schématiquement les différentes phases du procédé objet de l'invention pour la réalisation d'une poulie à gorges multiples destinées à recevoir des courroies synchrones ;
- la figure 3 schématise une poulie à gorges multiples pour une application à des courroies striées ;
- la figure 4 décrit une poulie à gorges multiples pour une application à des courroies trapézoïdales ;
- la figure 5 illustre la réalisation d'une poulie à gorges multiples destinées à des applications mixtes, c'est à dire à recevoir dans ses gorges des poulies de types différents ;

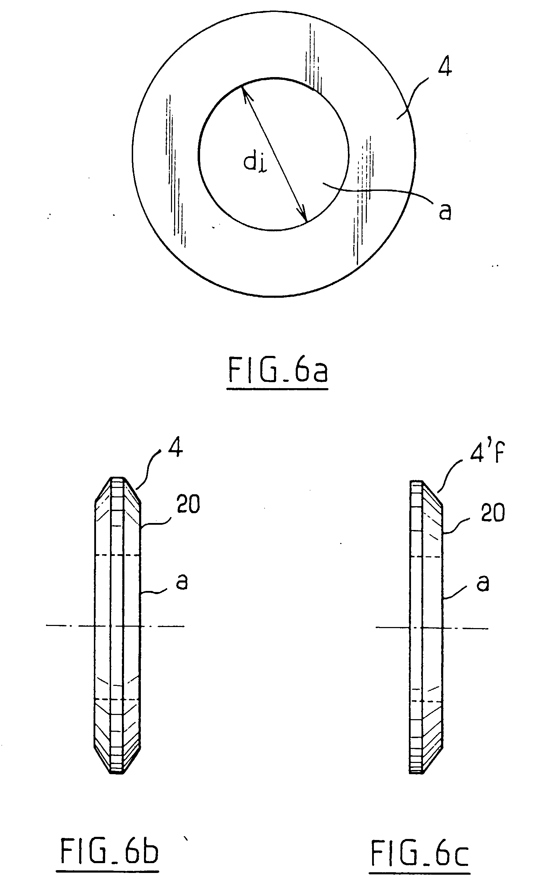

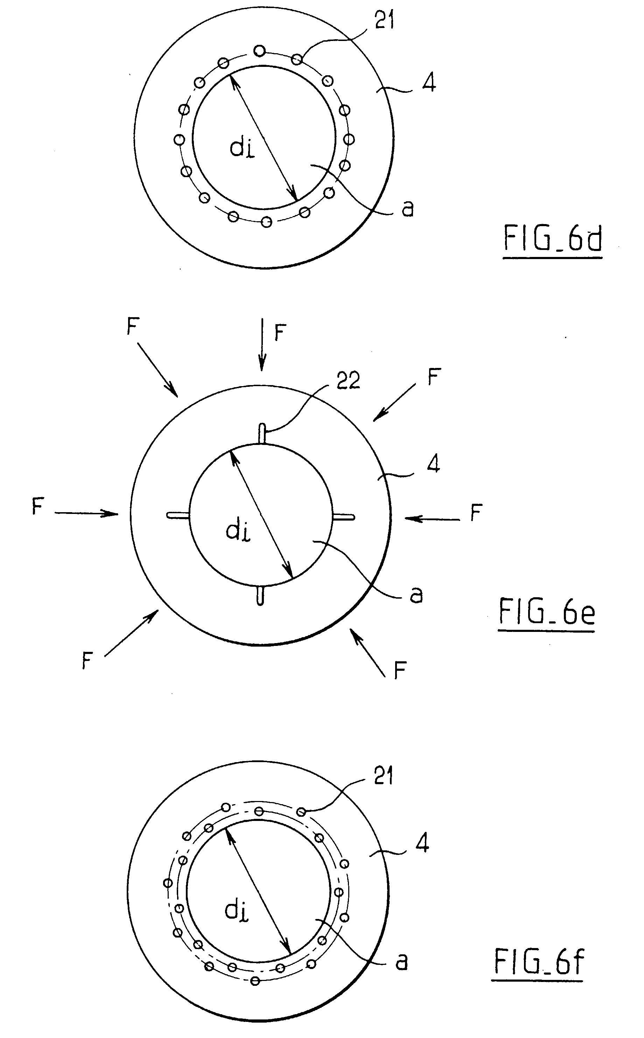

- la figure 6 montre diverses variantes de formes qui peuvent être données aux flasques, selon les applications Pour faciliter la lecture, le procédé objet de l'invention est illustré et décrit pour la réalisation d'un élément rotatif à gorges multiples constitué d'une poulie destinée à recevoir des liens souples sans fin constitués de courroies flexibles, étant entendu que ledit procédé est adaptable à la réalisation de tout autre élément rotatif constitué d'un moyeu unique et de flasques, tels que -à titre d'exemples non limitatifs- des disques de variateurs de vitesse, des rouleaux de renvoi, ou des galets.

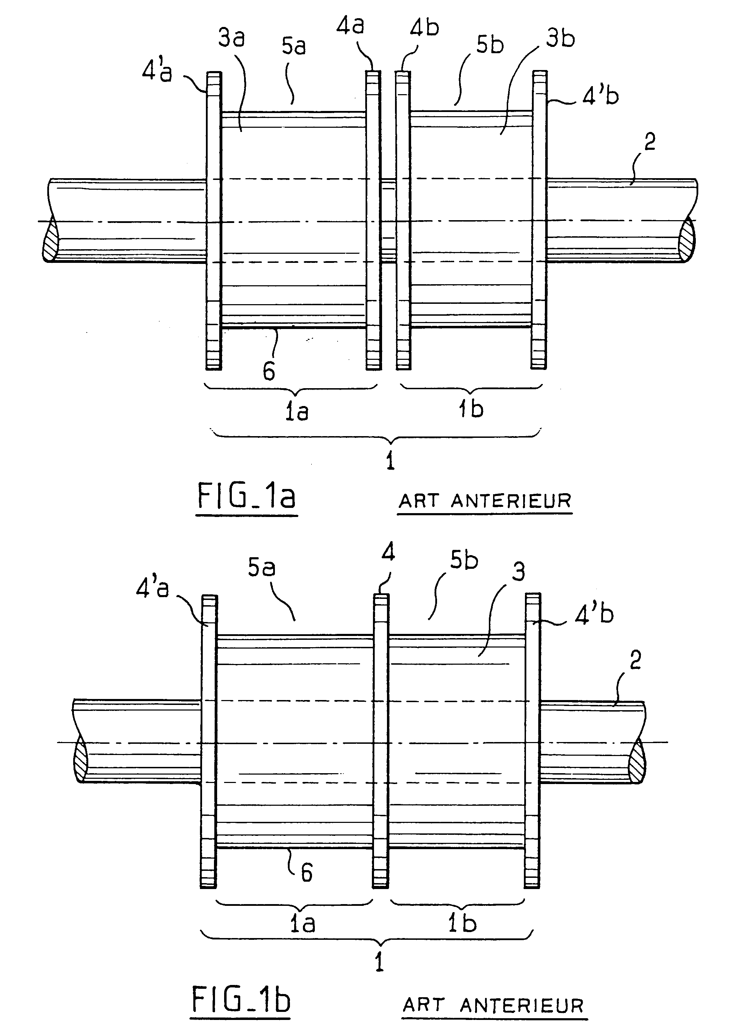

La figure 1 représente une poulie destinée à recevoir deux courroies plates, réalisée selon les techniques de l'art antérieur, par juxtaposition de deux poulies élémentaires à gorge simple.

La poulie à gorges multiples (1) est donc réalisée par montage sur un axe commun (2) de deux poulies élémentaires (1a, 1b) constituées chacune d'un moyeu (3a, 3b), le plus souvent de même diamètre, duquel sont rendus solidaires, par des moyens appropriés, le plus généralement soit par soudure
- continue ou par points- soit par sertissage, plus rarement par collage, les flasques d'extrémité (4a, 4'a, 4b, 4'b) qui définissent avec la surface extérieure (6) des moyeux (3a, 3b) des gorges (5a, 5b) destinées à recevoir les liens souples sans fin, des courroies plates dans l'exemple illustré. Le but des flasques d'extrémités (4a, 4'a, 4b, 4'b) est d'éviter le déport latéral des courroies en cours de fonctionnement, sous l'effet des formes latérales dues à un défaut d'alignement des axes des organes à entraîner et aux forces centrifuges s'exerçant dans l'installation.

Sur la vue 1a, les deux poulies élémentaires (1a, 1b) sont montées par simple juxtaposition sur un axe commun (2), chacune conservant ses deux flasques d'extrémités (4a, 4'a) pour la poulie élémentaire (1a), (4b, 4'b) pour la poulie élémentaire (1b) ; de ce fait, le flasque intermédiaire de séparation des deux gorges (5a, 5b) est constitué des flasques d'extrémités (4a, 4b) accolés.

Cependant, afin de réduire la masse de la poulie à gorges multiples (1), il est généralement préféré de munir une des poulies élémentaires -ici (1b)- d'un seul de ses flasques d'extrémité (4'b), le flasque d'extrémité (4a) de l'autre poulie élémentaire (1a) devenant, après le montage sur l'axe commun (2) le flasque intermédiaire de séparation des deux gorges (5a, 5b).

Cette réalisation simple, destinée à des courroies plates, c'est à dire de section rectangulaire, ne pose pas de problème particulier d'usinage des moyeux ((3a, 3b) dont la surface reste lisse.

Pour ce type d'application, il est également possible, comme illustré sur la vue lb, de réaliser la mise en place du flasque intermédiaire de séparation (4), comme celle des flasques d'extrémités (4'a, 4'b) sur un moyeu (3) commun, pour former les gorges (5a, 5b) destinées à recevoir les courroies plates de transmission.

Si l'usinage du moyeu ne pose pas de problème majeur dans le cas de la réalisation d'une poulie à gorges multiples pour courroies plates ou même pour courroies trapézoïdales, il n'en va pas de même pour des poulies multiples à entraînement positif destinées à coopérer avec des courroies synchrones, pour lesquelles, la seule technique utilisée jusqu'à ce jour est la juxtaposition de poulies élémentaires présentant un profil de fond de gorge conjugué du profil en regard de la courroie synchrone, ce profil de fond de gorge étant obtenu par fraisage du moyeu de chacune des poulies élémentaires, les flasques d'extrémités étant alors disposés sur les flans de chacun des moyeux, le plus souvent par soudure ou sertissage, plus rarement par collage.

La mise en place, par les techniques conventionnelles, d'un ou plusieurs flasques intermédiaires de séparation des gorges est, en effet, rendue impossible par le profil de la surface du moyeu.

Le procédé objet de l'invention présente tout son intérêt pour ce type de réalisation d'une poulie à gorges multiples pour courroies synchrones.

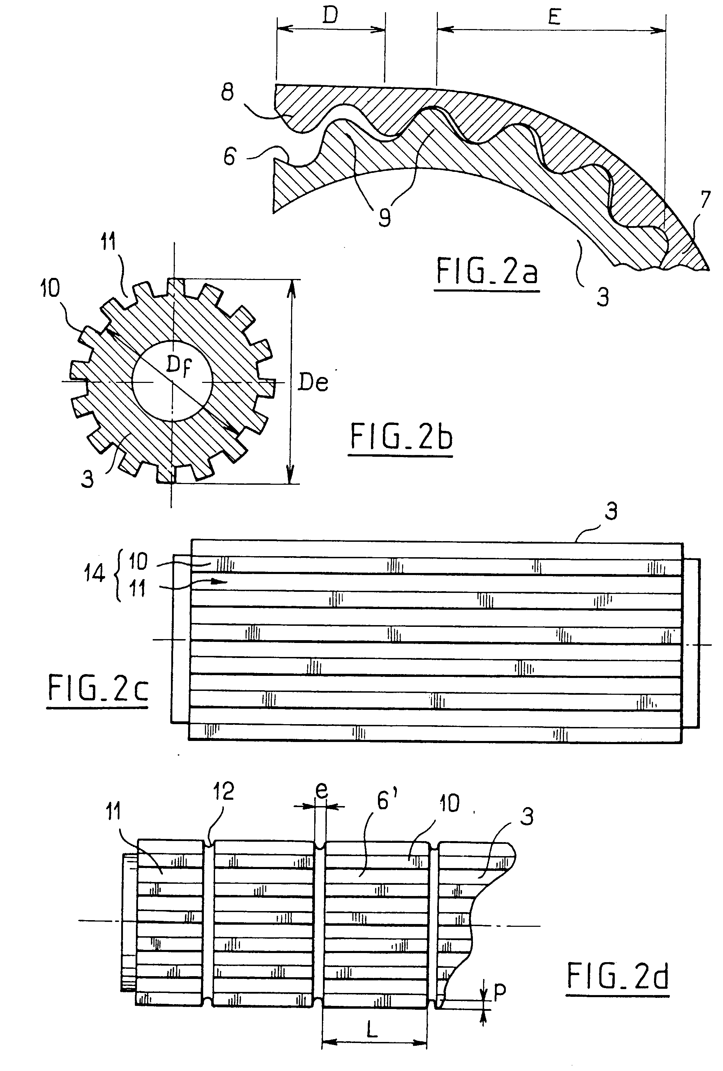

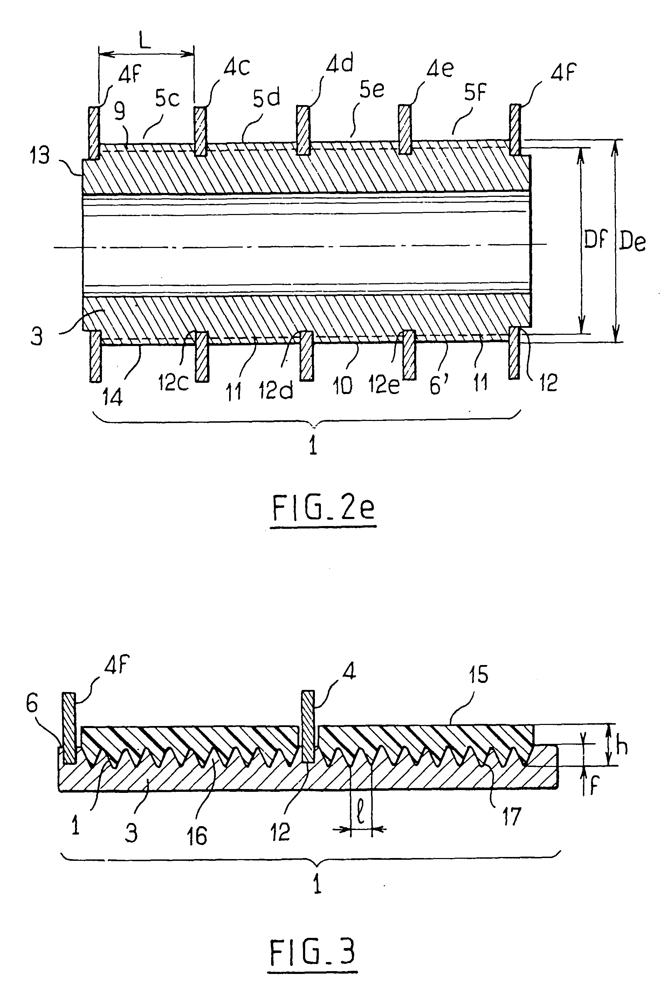

La figure 2 schématise les différentes phases du procédé, précisément pour la réalisation de telles poulies à gorges multiples destinées à coopérer avec des courroies synchrones, c'est à dire des courroies comportant, sur l'une au moins de leurs faces, des dents disposées transversalement à l'axe longitudinal de la courroie et à pas constant.

Ce type de transmission, dont le but est d'indexer parfaitement le mouvement transmis à l'organe à entraîner sur celui fourni par l'organe moteur, nécessite, en effet, que chacune des gorges de la poulie à gorges multiples présente un profil conjugué de celui de la face de la courroie synchrone qui se trouve en regard.

La vue 2a illustre les profils de la surface externe (6) du moyeu unique (3) conjugué du profil de la face interne de la courroie synchrone (7) dans la zone d'engrènement (E) et dans la zone de désengagement (D) des profils de la surface externe (6) du moyeu unique (3) et des dents individuelles (8) de la courroie synchrone (7) dans une gorge (5) de la poulie à gorges multiples (1).

La surface externe (6) du moyeu unique (3) constitue alors le fond de gorge (9) de profil conjugué de celui de la face en regard de la courroie synchrone (7).

Le procédé objet de l'invention comporte, en premier lieu, le fraisage de la surface externe (6) du moyeu unique (3) pour créer un crantage longitudinal présentant un profil conjugué de celui de la courroie synchrone (7), comme illustré sur les vues 2b -vue en bout- et 2c, pour créer sur la surface externe (6) du moyeu unique (3), les reliefs de dents (10), conjugués de l'espace entre deux dents individuelles (8) de la courroie synchrone (7), c'est à dire possédant même forme et mêmes dimensions, ainsi que les creux de dents (11), conjugués des sommets des dents individuelles (8) portées par la courroie synchrone (7).

La deuxième phase du procédé objet de l'invention consiste à pratiquer -au tour, par exemple- sur le moyeu unique (3), après fraisage destiné à la création du crantage longitudinal constitué des reliefs de dents (10) séparés par les creux de dents (11), autant de rainures circonférentielles d'insertion (12) que l'on désire insérer de flasques intermédiaires de séparation (4), comme illustré sur la vue 2d qui ne montre qu'une fraction du moyeu unique (3).

La largeur (e) des rainures circonférentielles d'insertion (12) est préférentiellement égale ou à peine supérieure à l'épaisseur du flasque intermédiaire de séparation (4) qui y sera placé. Par ailleurs, la profondeur (p) desdites rainures circonférentielles d'insertion (12) est nécessairement faible devant le diamètre externe (De) du moyeu unique (3), mesuré au sommet de deux reliefs de dents (10) diamétralement opposées.

Les flasques intermédiaires de séparation (4) de deux gorges consécutives (5) présentent une forme de disque plat à section rectangulaire et comportent un alésage central (a) dont le diamètre final (da) est inférieur, après mise en place définitive desdits flasques intermédiaires de séparation (4) sur le moyeu unique (3), au diamètre (Df) dudit moyeu unique (3) mesuré entre deux creux de dents (11) diamétralement opposés.

La vue 2e illustre, en coupe, une poulie à gorges multiples (1), après la dernière phase de réalisation selon le procédé objet de l'invention.

Les flasques intermédaires de séparation (4c, 4d, 4e) dont le diamètre initial (di) de l'alésage central (a) est à peine supérieur à celui du diamètre externe (De) du moyeu unique (3), sont disposés par glissement au dessus dudit moyeu unique (3) jusqu'à venir prendre place dans les rainures circonférentielles d'insertion (12c, 12d, 12e) correspondantes.

Ils sont alors rendus solidaires du moyeu unique (3), au fond des rainures circonférentielles d'insertion (12c, 12d, 12e), par une opération mécanique de solidarisation appropriée, telle qu'un rétreint ou un frettage à chaud, destinée à ramener le diamètre initial (di) de l'alésage central (a) desdits flasques intermédiaires de séparation (4c, 4d, 4e) à la valeur (da) légèrement inférieure à la valeur du diamètre (Df) du moyeu unique (3) mesuré au fond de deux creux de dents (11) diamétralement opposés.

Les flasques d'extrémités (4f) sont alors disposés aux extrémités du moyeu unique (3) soit par les moyens classiques de soudure, de sertissage ou de collage ou, comme les flasques intermédiaires de séparation (4c, 4d, 4e), selon le procédé objet de l'invention, par rétreint mécanique ou par frettage à chaud, dans des rainures circonférentielles d'insertion (12) prévues à cet effet.

Les flasques d'extrémités (4f) et les flasques intermédiaires de séparation (4c, 4d, 4e) définissent entre eux et avec la surface fraisée (6') du moyeu unique (3) des gorges (5c, 5d, 5e, 5f) destinées à recevoir les courroies synchrones (7).

Chacune des gorges (5c, 5d, 5e, 5f) présente donc un fond de gorge (9) formé par la surface fraisée (6') du moyeu unique (3) et comporte, par conséquent, un profil de fond de gorge (14), constitué par les reliefs de dents (10) associés aux creux de dents (11) conjugué de celui de la face interne de la courroie synchrone qui y sera montée.

Sur les vues 2d et 2e, la largeur (L) de chacune des gorges (5c, 5d, 5e, 5f) est illustrée constante. Il est bien évident, pour l'homme de l'art que cette largeur peut être différente d'une gorge à l'autre, en fonction de la largeur des courroies synchrones (7) qui y seront placées, puisqu'il suffit de disposer, dans la phase d'usinage au tour, les rainures circonférentielles d'insertion (12c, 12d, 12e) aux emplacements prévus pour la mise en place des flasques intermédiaires de séparation (4c, 4d, 4e).

Le procédé objet de l'invention présente également l'avantage de permettre la fabrication simultanée de plusieurs poulies à gorges multiples (1). En ce cas, le procédé consiste à fraiser un moyeu unique (3) de grande longueur pour lui conférer le crantage longitudinal qui sera conjugué du profil de la face interne en regard des courroies synchrones (7) qui seront, ultérieurement, placées dans les gorges, à usiner, ensuite, au tour, les rainures circonférentielles d'insertion (12) aux emplacements destinés à recevoir les flasques d'extrémités (4f) comme les flasques intermédiaires de séparation (4), à procéder au montage desdits flasques puis à pratiquer l'opération mécanique de leur solidarisation avec le moyeu unique (3) au fond desdites rainures circonférentielles d'insertion (12) et enfin à découper ledit moyeu unique (3) en poulies à gorges multiples (1) individuelles.

D'autres formes de gorges (5) sont aisément réalisables grâce au procédé objet de l'invention.

C'est ainsi que la figure 3 schématise une poulie à gorges multiples réalisée selon ce procédé, pour une application à des courroies striées, c'est à dire des courroies présentant, sur l'une au moins de leurs faces des stries disposées longitudinalement, à l'opposé de la disposition transversale des dents individuelles d'une courroie synchrone, lesdites stries étant régulièrement espacées par des rainures longitudinales.

Le procédé objet de l'invention permet également de réaliser simultanément plusieurs poulies à gorges multiples pour courroies striées à partir d'un moyeu unique de grande longueur qui est, à la fin de l'opération, découpé en poulies à gorges multiples (1) individuelles.

Le procédé objet de l'invention pour réaliser des poulies à gorges multiples (1) destinées à coopérer avec des courroies striées est similaire à celui décrit en figure 2 pour la réalisation de poulies à gorges multiples (1) destinées aux courroies synchrones (7), à l'exception de la première phase de l'opération, le fraisage de la surface externe (6) du moyeu unique (3) n'ayant pas lieu d'être.

Le procédé se trouve donc simplifié puisque le moyeu unique (3) reçoit, par usinage au tour par exemple, sur sa face externe (6), outre les rainures circonférentielles d'insertion (12) destinées à la mise en place des flasques intermédiaires de séparation (4) et, éventuellement, des flasques d'extrémités (4f), un profil circonférentiel (16) constitué d'un ensemble de gorges circonférentielles individuelles (17), en nombre correspondant au nombre de stries que porte la face en regard de la courroie striée (15).

Les gorges circonférentielles individuelles (17) présentent une largeur (1) correspondant à la distance entre les sommets de deux stries consécutives de la courroie striée (15) et une hauteur (f') correspondant à la hauteur (f) de la base de la courroie striée (15) qui présente, elle, une hauteur totale (h).

Les flasques intermédiaires de séparation (4) et les flasques d'extrémité (4f) présentent, comme dans le cas de la variante précédente, une forme de disque plat à section rectangulaire, avec un alésage central (a).

La mise en place d'au moins un flasque intermédiaire de séparation (4) et celle des flasques d'extrémités (4f) se font, d'une manière identique à celle décrite précédemment, dans les rainures circonférentielles d'insertion (12) usinées sur la surface externe (6) du moyeu unique (3) en même temps que l'ensemble des gorges circonférentielles individuelles (17), par glissement au dessus du moyeu unique (3) puis solidarisation au fond des rainures circonférentielles d'insertion (12) par l'opération mécanique de rétreint ou de frettage à chaud.

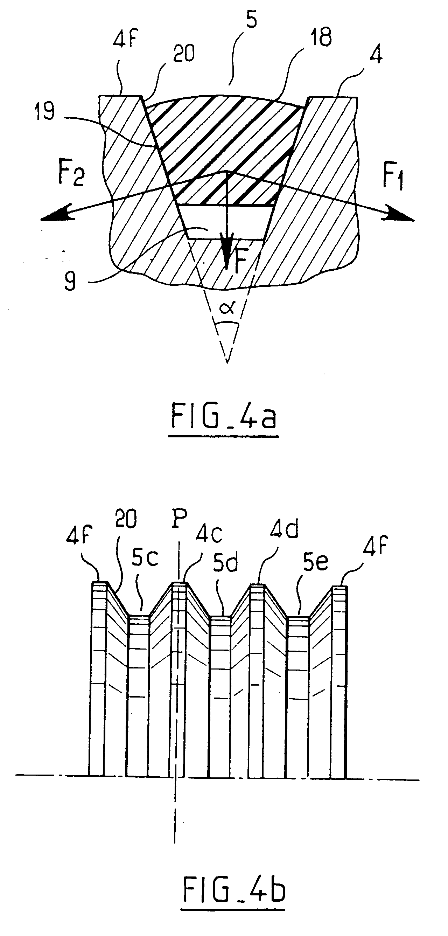

Comme il le permet pour des courroies synchrones (7) et pour des courroies striées (15), le procédé objet de l'invention autorise la réalisation d'une ou, simultanément, de plusieurs poulies à gorges multiples (1) pour des courroies de section trapézoïdale (18), comme illustré sur la figure 4. Il se simplifie, alors, la première phase de fraisage de la surface externe (6) du moyeu unique (3) pour créer un crantage longitudinal, nécessaire pour les courroies synchrones (7) ou d'usinage, sur ledit moyeu unique (3), de l'ensemble des gorges circonférentielles individuelles (17) destinées à recevoir les stries des courroies striées (15) n'ayant pas lieu d'être.

Le fond de gorge (9) de la gorge (5) délimitée par la surface externe (6) du moyeu unique (3) et soit deux flasques intermédiaires de séparation (4) successifs soit par un flasque intermédiaire de séparation (4) et un flasque d'extrémité (4f) ne joue, en effet, aucun rôle car la courroie de section trapézoïdale (18) ne se trouve, en fonctionnement, jamais à son contact, la transmission de couple s'exerçant par appui latéral des flancs (19) de la courroie à section trapézoïdale (18) sur les parois de deux flasques intermédiaires de séparation (4) consécutifs ou sur celles d'un flasque intermédiaire de séparation (4) et d'un flasque d'extrémité (4f).

La vue 4a schématise ce fonctionnement de la courroie de section trapézoïdale (18), dont l'appui latéral des flancs sur les flasques intermédiaires de séparation (4) permet la décomposition de la force de pression (F) en deux forces latérales (F1) et (F2).

Seules diffèrent des applications précédemment décrites la forme des flasques intermédiaires de séparation (4c, 4d) présentant un plan de symétrie (P) et un profil trapézoïdal et celle des flasques d'extrémités (4f), eux asymétriques et présentant un profil semi-trapézoïdal. C'est, en effet, la forme des deux flasques intermédiaires de séparation (4c, 4d), comme illustré sur la vue partielle 4b, qui, entre eux ou avec celle des flasques d'extrémité (4f), définit la forme des gorges trapézoïdales (5c, 5d, 5e) destinées à recevoir les courroies de section trapézoïdale (18). L'angle de gorge (α), formé entre deux flancs (20) de deux flasques intermédiaires de séparation (4) successifs ou d'un flasque intermédiaire de séparation (4) et d'un flasque d'extrémité (4f) est variable selon le type de courroies de section trapézoïdale (18) à monter dans la gorge trapézoïdale (5c, 5d, 5e).

Comme décrit, le procédé objet de l'invention permet donc de fabriquer des poulies à gorges multiples (1) destinées à recevoir, pour l'entraînement d'organes différents, au moins deux courroies plates ou au moins deux courroies de section trapézoïdale (18) ou au moins deux courroies striées (15) ou encore au moins deux courroies synchrones (7) ou crantées.

Cependant, grâce à sa flexibilité, le procédé objet de l'invention permet également la réalisation de poulies à gorges multiples (1), comportant au moins deux gorges (5) destinées à la fois à au moins une courroie synchrone (7) ou crantée pour l'indexation d'un ou plusieurs organes et de courroie(s) plate(s) ou de courroie(s) striée(s) (15) ou de courroie(s) trapézoïdale(s) (18), pour la transmission de force ou de puissance à d'autres organes, c'est à dire l'association de courroies de types différents.

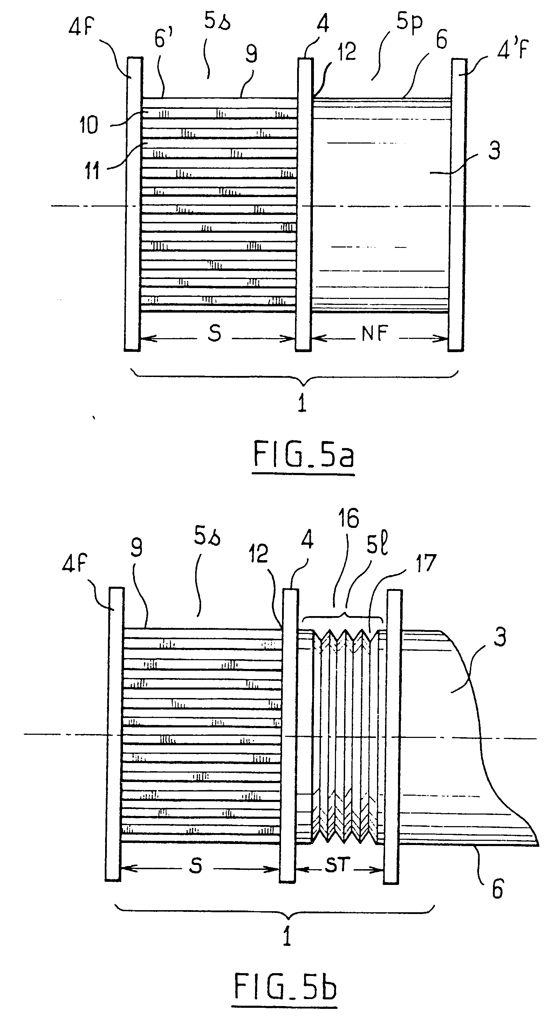

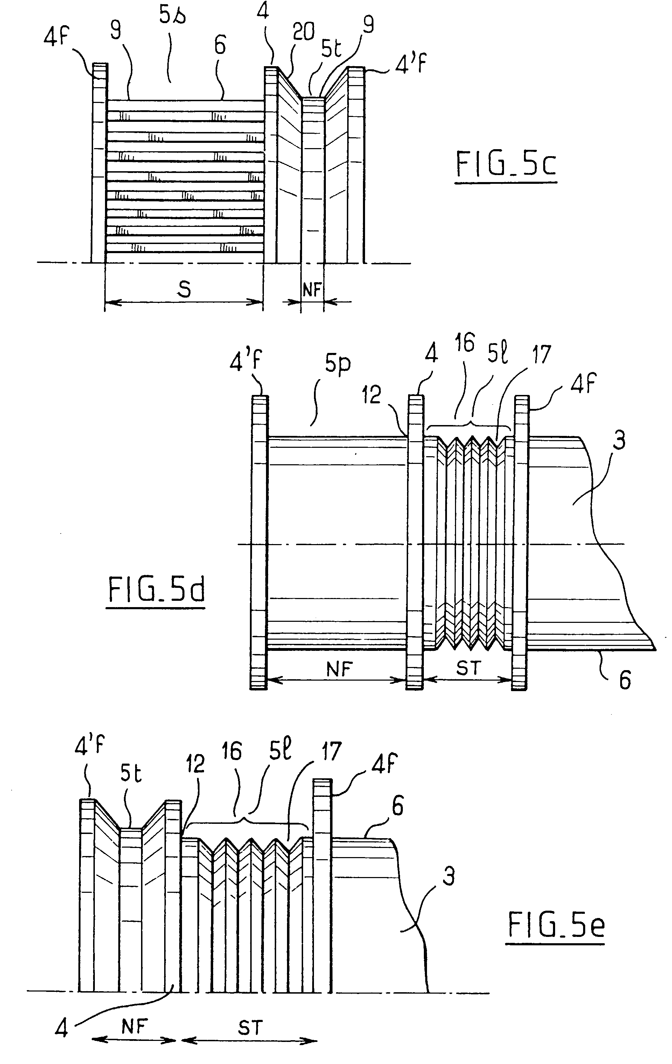

La figure 5 illustre différentes variantes de telles poulies à gorges multiples pour applications mixtes où, à titre d'exemples, ont été limités à deux les divers types de courroies qu'il est possible d'associer pour l'indexation ou l'entraînement d'organes différents, étant entendu qu'il est possible de monter, sur le moyeu unique (3), un nombre de courroies plus élevé et de natures différentes.

Quelle que soit l'application à laquelle est destinée la poulie à gorges multiples (1) réalisée par le procédé objet de l'invention, il est évident qu'il est possible d'associer à différents profils de gorges des largeurs différentes, puisque la largeur de la gorge est définie par l'emplacement des rainures circonférentielles d'insertion (12) dans lesquelles sont placés les flasques intermédiaire de séparation (4) et éventuellement des flasques d'extrémité (4f) et que le procédé objet de l'invention permet le positionnement desdites rainures circonférentielles d'insertion (12) aux emplacements appropriés, sans limitation de dimensions.

Le type de courroies qui coopèrent avec la poulie à gorges multiples (1), dans les différentes gorges (5), définit la forme des flasques d'extrémités (4f) et celle des flasques intermédiaires de séparation (4), étant entendu que, pour les poulies à gorges multiples destinées à des applications mixtes, peuvent être associées plusieurs formes de flasques montés dans les rainures circonférentielles d'insertion (12) usinées, à cet effet, dans le moyeu unique (3), aux emplacements appropriés qui sont fonction des largeurs des courroies à monter dans chacune des gorges (5).

La vue 5a représente une telle poulie à gorges multiples (1) pour applications mixtes, permettant le montage dans deux gorges voisines (5s, 5p) d'une courroie synchrone (7) pour l'indexation d'un premier organe et d'une courroie plate pour l'entraînement d'un second organe.

Par rapport à la description du procédé destiné à la réalisation de la poulie à gorges multiples (1) destinée à recevoir les courroies synchrones (7) de la figure 2, la seule différence réside dans le fraisage de la surface externe (6) du moyeu unique (3) qui, dans la présente application, est limité à la seule zone (S) de ladite surface externe (6) pour former le fond de gorge (9) de la gorge (5s) de profil conjugué de celui de la face en regard de la courroie synchrone (7), l'autre partie de la surface externe (6) du moyeu unique (3) restant dans son état initial.

De ce fait, la gorge (5s), définie par le flasque d'extrémité (4f), le flasque intermédiaire de séparation (4) et la surface fraisée (6') du moyeu unique (3), dans la zone (S), surface portant les reliefs de dents (10) et les creux de dents (11) formant le fond de gorge (9) au profil conjugué de celui de la courroie synchrone (7), est destiné à recevoir ladite courroie synchrone (7). La gorge (5p), définie par le flasque d'extrémité opposée (4'f), le flasque intermédiaire de séparation (4) et la surface externe (6) de la zone non fraisée (NF) du moyeu unique (3), est destinée à recevoir la courroie plate de section rectangulaire.

Le fraisage de la zone (S) de la surface externe (6) du moyeu unique (3) est suivi de l'usinage des rainures circonférentielles d'insertion (12) aux emplacements prévus pour recevoir les flasques intermédiaires de séparation (4) et, éventuellement, les flasques d'extrémité (4f) qui présentent une forme de disque plat à section rectangulaire et dont le montage se fait par glissement au dessus du moyeu unique (3) grâce à leur alésage central (a), leur mise en place étant assurée par l'opération mécanique de solidarisation consistant en un rétreint ou un frettage à chaud.

D'une manière similaire, il est possible, comme illustré sur la vue 5b, de réaliser, par le procédé objet de l'invention des poulies à gorges multiples (1), destinées à la fois à un ensemble de courroies synchrones (7) ou crantées et de courroies striées (15) . Comme dans le cas précédent, le fraisage de la surface externe (6) du moyeu unique (3) est, dans la présente application, limité à la seule zone (S) de la surface externe (6) dudit moyeu unique (3) pour former le fond de gorge (9) de la gorge (5s) de profil conjugué de celui de la face en regard de la courroie synchrone (7), l'autre partie (ST) de la surface externe (6) du moyeu unique (3) recevant, par usinage au tour par exemple, le profil circonférentiel (16) constitué de l'ensemble des gorges circonférentielles individuelles (17), en nombre correspondant au nombre de stries portées par la courroie striée (15) former le fond de gorge (9) de la gorge (51) de profil conjugué de celui de la face en regard de ladite courroie striée (15). L'usinage de la surface externe (6) de la zone (ST) permet de créer simultanément ledit profil circonférentiel (16) et les rainures circonférentielles d'insertion (12) destinées à la mise en place des flasques intermédiaires de séparation (4) et, éventuellement, des flasques d'estrémité (4f).

Les flasques intermédiaires de séparation (4) et les flasques d'extrémités (4f) présentent une forme de disque plat à section rectangulaire et leur montage s'opère par glissement au dessus du moyeu unique (3) grâce à leur alésage central (a), leur mise en place étant assurée par l'opération mécanique de solidarisation consistant en un rétreint ou un frettage à chaud.

Comme illustré sur la vue 5c, il est également possible de réaliser, par le procédé objet de l'invention des poulies à gorges multiples (1), destinées à la fois à un ensemble de courroies synchrones (7) ou crantées et de courroies de section trapézoïdale (18).

Comme précédemment, le fraisage de la surface externe du moyeu unique (3) reste, dans la présente application, limité à la seule zone (S) de la surface externe (6) dudit moyeu unique (3) pour former le fond de gorge (9) de la gorge (5s) de profil conjugué de celui de la face en regard de la courroie synchrone (7). L'autre partie (NF) de la surface externe (6) du moyeu unique (3) reste dans son état initial, puisque la courroie de section trapézoïdale (18) ne vient jamais au contact du fond de gorge (9) de la gorge (5t), la transmission de couple s'effectuant par appui des flancs (19) de ladite courroie de section trapézoïdale (18) sur les flancs (20) de deux flasques intermédiaires de séparation (4) successifs ou d'un flasque intermédiaire de séparation (4) et d'un flasque d'extrémité (4'f) formant ladite gorge (5t).

La forme des flasques intermédiaires de séparation (4) et celle des flasques d'extrémité (4f, 4'f) doivent être adaptées à la forme des gorges (5s) destinée à la courroie synchrone (7) et (5t) destinée à recevoir la courroie de section trapézoïdale (18).

Dans la variante illustrée, le flasque intermédiaire de séparation (4) présente une forme de disque à profil semi-trapézoïdal symétrique de celle du flasque d'extrémité (4'f) limitant l'extrémité libre de la poulie à gorges multiples (1) du côté de la gorge (5t) destinée à recevoir la courroie de section trapézoïdale (18). Le flasque d'extrémité (4f) de l'extrémité libre opposée de la poulie à gorges multiples (1) du côté de la gorge (5s) présente, lui, une forme de disque plat à section rectangulaire.

Comme précédemment, le montage des flasques intermédiaires de séparation (4) et, éventuellement des flasques d'extrémités (4f) se fait par glissement au dessus du moyeu unique (3) grâce à leur alésage central (a), leur mise en place étant assurée par l'opération mécanique de solidarisation consistant en un rétreint ou un frettage à chaud.

Il est également possible, comme illustré sur la vue 5d, de réaliser, par le procédé objet de l'invention des poulies à gorges multiples (1), destinées à la fois à un ensemble de courroies striées (15) et de courroies plates.

Dans cette variante, le procédé se simplifie puisque le fraisage de la surface externe (6) du moyeu unique (3) pour former le crantage longitudinal nécessaire pour le fond de gorge (9) des gorges (5s) destinées à recevoir les courroies synchrones des variantes précédentes n'a pas lieu d'être.

Seule la partie (ST) de la surface externe (6) du moyeu unique (3) reçoit, par usinage au tour par exemple, le profil circonférentiel (16) constitué de l'ensemble des gorges circonférentielles individuelles (17), en nombre correspondant au nombre de stries portées par la courroie striée (15) former le fond de gorge (9) de la gorge (51) de profil conjugué de celui de la face en regard de ladite courroie striée (15), l'autre partie (NF) de la surface externe restant dans l'état initial. L'usinage de la surface externe (6) de la zone (ST) permet de créer simultanément ledit profil circonférentiel (16) et les rainures circonférentielles d'insertion (12) destinées à la mise en place des flasques intermédiaires de séparation (4) et, éventuellement, des flasques d'estrémité (4f).

De ce fait, la gorge (51), définie par le flasque d'extrémité (4f), le flasque intermédiaire de séparation (4) et la surface (6) du moyeu unique (3), dans la zone (ST), surface portant le profil circonférentiel (16), formant le fond de gorge (9) au profil conjugué de celui de la courroie striée (15), est destiné à recevoir ladite courroie striée (15). La gorge (5p), définie par le flasque d'extrémité opposée (4'f), le flasque intermédiaire de séparation (4) et la surface externe (6) de la zone non fraisée (NF) du moyeu unique (3), est destinée à recevoir la courroie plate de section rectangulaire.

Les flasques d'extrémités (4f, 4'f), comme chacun des flasques intermédiaires de séparation (4), présentent une forme de disque plat, à section rectangulaire. Comme dans les autres variantes, leur montage s'opère par glissement au dessus du moyeu unique (3), grâce à leur alésage central (a), leur mise en place étant assurée par l'opération mécanique de solidarisation.

Il est également possible, comme illustré sur la vue 5e, de réaliser, par le procédé objet de l'invention des poulies à gorges multiples (1), destinées à la fois au montage dans deux gorges voisines (51, 5t) d'une courroie striée (15) et d'une courroie à section trapézoïdale (18), pour l'entraînement de deux organes différents.

Dans cette variante, le procédé se simplifie puisque le fraisage de la surface externe (6) du moyeu unique (3) pour former le crantage longitudinal nécessaire pour le fond de gorge (9) des gorges (5s) destinées à recevoir les courroies synchrones des variantes précédentes n'a pas lieu d'être.

Seule la partie (ST) de la surface externe (6) du moyeu unique (3) reçoit, par usinage au tour par exemple, le profil circonférentiel (16) constitué de l'ensemble des gorges circonférentielles individuelles (17), en nombre correspondant au nombre de stries portées par la courroie striée (15) former le fond de gorge (9) de la gorge (51) de profil conjugué de celui de la face en regard de ladite courroie striée (15), l'autre partie (NF) de la surface externe restant dans l'état initial puisque la courroie de section trapézoïdale (18) ne vient jamais au contact du fond de la gorge (5t). L'usinage de la surface externe (6) de la zone (ST) permet de créer simultanément ledit profil circonférentiel (16) et les rainures circonférentielles d'insertion (12) destinées à la mise en place de chacun des flasques intermédiaires de séparation (4) et, éventuellement, des flasques d'estrémité (4f).

De ce fait, la gorge (51), définie par le flasque d'extrémité (4f), le flasque intermédiaire de séparation (4) et la surface (6) du moyeu unique (3), dans la zone (ST), surface portant le profil circonférentiel (16), formant le fond de gorge (9) au profil conjugué de celui de la courroie striée (15), est destiné à recevoir ladite courroie striée (15). La gorge (5t), définie par le flasque d'extrémité opposée (4'f), le flasque intermédiaire de séparation (4) et la surface externe (6) de la zone non fraisée (NF) du moyeu unique (3), est destinée à recevoir la courroie de section trapézoïdale (18).

Le flasque d'extrémité (4f) qui limite l'extrémité libre de la poulie à gorges multiples (1) du côté de la gorge (51) destinée à recevoir la courroie striée (15), présente une forme de disque plat à section rectangulaire, alors que le flasque intermédiaire de séparation (4) présente une forme de disque plat à profil semi-trapézoïdal, comme le flasque d'extrémité (4'f) qui limite l'extrémité libre de la poulie à gorges multiples (1) du côté de la gorge (5t) destinée à recevoir la courroie de section trapézoïdale (18), de profil symétrique dudit flasque intermédiaire de séparation (4).

Comme dans les autres variantes, leur montage s'opère par glissement au dessus du moyeu unique (3), grâce à leur alésage central (a), leur mise en place étant assurée par l'opération mécanique de solidarisation.

Afin de permettre l'usinage de la surface externe (6) du moyeu unique (3) pour former les rainures circonférentielles d'insertion (12) destinées au montage des flasques intermédiaires de séparation (4) et, éventuellement, des flasques d'extrémité (4f), comme l'usinage simultané du profil circonférentiel (16) constitué de l'ensemble des gorges circonférentielles individuelles (17) pour réaliser le fond de gorge (9) de la gorge (51) destinée à la courroie striée (15), lorsque le cas se présente, et, dans tous les cas où celà s'avère nécessaire, le fraisage du moyeu unique (3) pour créer le crantage longitudinal destiné à former le fond de gorge (9) au profil conjugué de celui de la courroie synchrone (7), le moyeu unique sera préférentiellement réalisé en acier.

La forme des flasques intermédiaires de séparation (4) et des flasques d'extrémités (4f) étant fonction de l'application, la figure 6 représente les différentes variantes de formes qui peuvent leur être données pour séparer les différentes gorges (5) des poulies à gorges multiples (1) réalisées selon le procédé objet de l'invention.

Les flasques sont, généralement, réalisés en métal de faible épaisseur, le plus souvent en aluminium ou en fonte.

Ils présentent une forme de disque plat à section rectangulaire, dans toutes les applications ne concernant pas les courroies de section trapézoïdale, comme illustré en vue 6a.

Par contre, lorsque la poulie à gorges multiples (1) est prévue pour recevoir, dans deux gorges successives (5t), des courroies de section trapézoïdale, le flasque intermédiaire de séparation (4) présente une forme de disque à profil trapézoïdal, comme schématisé en vue 6b, alors que les flasques d'extrémité (4f) présentent une forme de disque plat à section rectangulaire s'ils limitent des gorges (51, 5p, 5s) destinées à des courroies de section non trapézoïdale.

Les flasques d'extrémités (4f') présentent, eux, une forme de disque à profil semi-trapézoïdal, comme illustré en vue 6c, s'ils limitent des gorges (5t) destinées à recevoir des courroies de section trapézoïdale.

Pour les poulies à gorges multiples destinées aux applications mixtes, les flasques intermédiaires de séparation (4) limitant une gorge (5t) pour courroie de section trapézoïdale (18) et une gorge (51, 5p, 5s) pour courroie striée (15), pour courroie plate ou pour courroie synchrone (7) ou dentée, présentent une forme de disque de profil semi-trapézoïdal, dont la face plane limite ladite gorge (51, 5p, 5s) destinée à recevoir la courroie de section non trapézoïdale. Ledit profil est alors semblable ou symétrique de celui des flasques d'extrémité (4'f), lorsque ceux-ci limitent également des gorges (5t) destinées à recevoir des poulies de section trapézoïdale.

Quel que soit leur profil, les flasques présentent une forme de disque monobloc plein. Cependant, pour améliorer la circulation de l'air, il peut être préféré d'utiliser des disques ajourés, présentant des trous (21) de forme ronde ou ovale ou des fentes (22), disposés le plus généralement au voisinage de l'alésage central (a), comme schématisé à titre d'exemples non limitatifs, sur les vues 6d, 6e et 6f.

Le procédé de solidarisation des flasques intermédiaires de séparation (4) et, éventuellement, des flasques d'extrémités (4f), au moyeu unique (3), au fond des rainures circonférentielles d'insertion (12), qui consiste, par un moyen mécanique approprié, à réduire le diamètre initial (di) de l'alésage central (a) pour l'amener à un diamètre final (df) ayant une valeur inférieure à celle du diamètre externe (De) du moyeu unique (3) aura tendance à ovaliser les trous (21) ou à déformer plus ou moins les fentes (22), sans que ceci soit préjudiciable au bon fonctionnement des flasques, la ventilation au voisinage du moyeu unique (3) n'en étant pas affectée de manière significative.

Préférentiellement, le procédé mécanique de solidarisation des flasques (4, 4f) au moyeu unique consiste en un rétreint de la matière, c'est à dire en l'application d'une force F, de valeur contrôlée, uniformément répartie sur leur périmètre, ou encore en un frettage à chaud, ayant le même but, comme schématisé par les flèches (F), sur la figure 6e.

L'homme de l'art pourra combiner les différentes variantes de poulies à gorges multiples décrites ou appliquer le procédé présenté à d'autres éléments rotatifs comportant des flasques ou des éléments de séparation ou d'extrémité d'une nature voisine, sans sortir du cadre de l'invention comme défini dans les revendications.

## Revendications

1. Procédé de réalisation d'éléments rotatifs pour la transmission de puissance, de force ou de mouvement, destinés à recevoir au moins deux liens souples sans fin et étant constitués d'un moyeu unique (3) équipé d'un nombre de flasques intermédiaires de séparation (4) et de flasques d'extrémité (4f) égal au nombre de liens souples sans fin augmenté d'une unité et comportant un alésage central (a), un flasque intermédiaire de séparation (4) définissant, avec le flasque intermédiaire de séparation (4) voisin ou un flasque d'extrémité (4f) et la surface externe (6) du moyeu unique (3) une gorge (5) destinée à recevoir un des liens souples sans fin, lesdits flasques étant disposés dans des rainures circonférentielles d'insertion (12), usinées à la surface externe (6) dudit moyeu unique (3), dont la profondeur est faible en regard du diamètre externe (De)dudit moyeu unique (3), le diamètre final (da) de l'alésage central (a) desdits flasques (4) étant inférieur au diamètre externe (De)du moyeu unique (3), après mise en place desdits flasques, procédé caractérisé en ce que les flasques intermédiaires de séparation (4) sont constitués de disques monoblocs de forme appropriée et en ce qu'ils sont rendus solidaires du fond des rainures circonférentielles d'insertion (12) par un rétreint radial, opération mécanique de solidarisation destinée à réduire le diamètre initial (di)de leur alésage central (a).

2. Procédé de réalisation d'éléments rotatifs pour la transmission de puissance, de force ou de mouvement, destinés à recevoir au moins deux liens souples sans fin, selon la revendication 1, caractérisé en ce que lesdits éléments rotatifs sont des poulies à gorges multiples (1) et en ce que lesdits liens souples sont des courroies flexibles de même nature ou de natures différentes, chacun des flasques intermédiaires de séparation (4) et, éventuellement les flasques d'extrémités (4f) étant rendu solidaires du fond de chacune des rainures circonférentielles d'insertion (12) par une opération mécanique de solidarisation.

3. Procédé de réalisation de poulies à gorges multiples (1) selon la revendication 2, destinées à coopérer avec au moins deux courroies plates, caractérisé en ce que chacun des flasques intermédiaires de séparation (4) et des flasques d'extrémité (4f) présentent une forme de disques plats à section rectangulaire, leur montage s'opèrant par glissement au dessus du moyeu unique (3) grâce à leur alésage central (a), leur mise en place dans les rainures circonférentielles d'insertion (12) étant assurée par l'opération mécanique de solidarisation.

4. Procédé de réalisation de poulies à gorges multiples (1) selon la revendication 2, destinées à coopérer avec au moins deux courroies de section trapézoïdale (18) caractérisé en ce que chaque flasque intermédiaire de séparation (4) présente une forme de disques à profil trapézoïdal alors que les flasques d'extrémité (4f) présentent une forme de disque à profil semi-trapézoïdal, leur montage s'opèrant par glissement au dessus du moyeu unique (3) grâce à leur alésage central (a), leur mise en place dans les rainures circonférentielles d'insertion (12) étant assurée par l'opération mécanique de solidarisation.

5. Procédé de réalisation de poulies à gorges multiples (1) selon la revendication 2, destinées à coopérer avec au moins deux courroies synchrones (7), caractérisé en ce que la surface externe (6) du moyeu unique (3) est fraisée, avant usinage des rainures circonférentielles d'insertion (12) et mise en place chacun des flasques intermédiaires de séparation (4) et des flasques d'extrémité (4f), pour former un crantage longitudinal en fond de gorge (9) de chacune des gorges (5), crantage longitudinal présentant des reliefs de dents (10) et des creux de dents (11), conférant ainsi à la surface externe (6) dudit moyeu unique (3), dans ladite gorge (5) un profil de fond de gorge (14) conjugué du profil de la face en regard de la courroie synchrone (7) qui y sera montée, et en ce que le diamètre initial (di) de l'alésage central (a) de chacun des flasques intermédiaires de séparation (4) et des flasques d'extrémité (4f) qui présentent une forme de disque plat à section rectangulaire est réduit, par l'opération mécanique de solidarisation qui suit leur mise en place dans les rainures circonférentielles d'insertion (12), à un diamètre final (da) dont la valeur est inférieure au diamètre (Df) du moyeu unique (3), mesuré au fond des creux de deux dents (11) diamètralement opposées.

6. Procédé de réalisation de poulies à gorges multiples (1) selon la revendication 2, destinées à coopérer avec au moins deux courroies striées, caractérisé en ce que l'usinage de la surface externe (6) du moyeu unique (3) permet la réalisation simultanée de rainures circonférentielles d'insertion (12) - destinées à la mise en place de chacun des flasques intermédiaires de séparation (4) et, éventuellement, des flasques d'extrémités (4f), flasques (4, 4f) qui présentent une forme de disque plat à section rectangulaire- et du profil circonférentiel (16) constitué de l'ensemble des gorges circonférentielles individuelles (17), en nombre correspondant au nombre de stries portées par la courroie striée (15), pour former le fond de gorge (9) de la gorge (51) de profil conjugué de celui de la face en regard de ladite courroie striée (15), le montage de chacun des flasques intermédiaires de séparation (4) et, éventuellement, des flasques d'extrémité (4f) s'opèrant par glissement au dessus du moyeu unique (3) grâce à leur alésage central (a), leur mise en place dans les rainures circonférentielles d'insertion (12) étant assurée par l'opération mécanique de solidarisation.

7. Procédé de réalisation de poulies à gorges multiples (1) selon la revendication 2, pour applications mixtes, permettant le montage dans deux gorges voisines (5s, 5p) d'une courroie synchrone (7) pour l'indexation d'un premier organe et d'une courroie plate pour l'entraînement d'un second organe, caractérisé en ce que le fraisage de la surface externe (6) du moyeu unique (3) est limité à la seule zone (S) de ladite surface externe (6) pour former le fond de gorge (9) de la gorge (5s) de profil conjugué de celui de la face en regard de la la courroie synchrone (7), l'autre partie (NF) de la surface externe (6) du moyeu unique (3) restant dans son état initial, et en ce que ledit fraisage est suivi de l'usinage de rainures circonférentielles d'insertion (12) aux emplacements prévus pour recevoir chacun des flasques intermédiaires de séparation (4) et, éventuellement, les flasques d'extrémité (4f) qui présentent une forme de disque plat à section rectangulaire et dont le montage se fait par glissement au dessus du moyeu unique (3) grâce à leur alésage central (a), leur mise en place dans les rainures circonférentielles d'insertion (12) étant assurée par l'opération mécanique de solidarisation.

8. Procédé de réalisation de poulies à gorges multiples (1) selon la revendication 2, pour applications mixtes, permettant le montage dans deux gorges voisines (5s, 5p) d'une courroie synchrone (7) pour l'indexation d'un premier organe et d'une courroie striée pour l'entraînement d'un second organe, caractérisé en ce que le fraisage de la surface externe (6) du moyeu unique (3) est limité à la seule zone (S) de ladite surface externe (6) pour former le fond de gorge (9) de la gorge (5s) de profil conjugué de celui de la face en regard de la courroie synchrone (7), et en ce que ledit fraisage est suivi de l'usinage simultané des rainures circonférentielles d'insertion (12) -aux emplacements prévus pour recevoir chacun des flasques intermédiaires de séparation (4) et, éventuellement, les flasques d'extrémité (4f) qui présentent une forme de disque plat à section rectangulaire- et du profil circonférentiel (16) constitué de l'ensemble des gorges circonférentielles individuelles (17), en nombre correspondant au nombre de stries portées par la courroie striée (15), pour former le fond de gorge (9) de la gorge (51) de profil conjugué de celui de la face en regard de ladite courroie striée (15), le montage de chacun des flasques intermédiaires de séparation (4) et, éventuellement, des flasques d'extrémité (4f) s'opèrant par glissement au dessus du moyeu unique (3) grâce à leur alésage central (a), leur mise en place dans les rainures circonférentielles d'insertion (12) étant assurée par l'opération mécanique de solidarisation.

9. Procédé de réalisation de poulies à gorges multiples (1) selon la revendication 2, pour applications mixtes, permettant le montage dans deux gorges voisines (5s, 5t) d'une courroie synchrone (7) pour l'indexation d'un premier organe et d'une courroie trapézoïdale (18) pour l'entraînement d'un second organe, caractérisé en ce que le fraisage de la surface externe (6) du moyeu unique (3) est limité à la seule zone (S) de ladite surface externe (6) pour former le fond de gorge (9) de la gorge (5s) de profil conjugué de celui de la face en regard de la la courroie synchrone (7), et en ce que ledit fraisage est suivi de l'usinage des rainures circonférentielles d'insertion (12) - aux emplacements prévus pour recevoir le flasque intermédiaire de séparation (4) qui présente une forme de disque à section semi-trapézoïdale et, éventuellement, les flasques d'extrémité (4f) qui limite l'extrémité libre de la poulie à gorges multiples (1) du côté de la gorge (5s) et présente une forme de disque plat à section rectangulaire et (4'f) qui limite l'extrémité libre de la poulie à gorges multiples du côté de la gorge (5t)- le montage du flasque intermédiaire de séparation (4) et, éventuellement, des flasques d'extrémité (4f, 4'f) s'opèrant par glissement au dessus du moyeu unique (3) grâce à leur alésage central (a), leur mise en place dans les rainures circonférentielles d'insertion (12) étant assurée par l'opération mécanique de solidarisation.

10. Procédé de réalisation de poulies à gorges multiples (1) selon la revendication 2, pour applications mixtes, permettant le montage dans deux gorges voisines (51, 5p) d'une courroie striée (15) pour l'entraînement d'un premier organe et d'une courroie plate pour l'entraînement d'un second organe, caractérisé en ce que l'usinage de la surface externe (6) du moyeu unique (3) permet la réalisation simultanée des rainures circonférentielles d'insertion (12) - aux emplacements prévus pour recevoir les flasques intermédiaires de séparation (4) et, éventuellement, les flasques d'extrémité (4f) qui présentent une forme de disque plat à section rectangulaire- et du profil circonférentiel (16) constitué de l'ensemble des gorges circonférentielles individuelles (17), en nombre correspondant au nombre de stries portées par la courroie striée (15), pour former le fond de gorge (9) de la gorge (51) de profil conjugué de celui de la face en regard de ladite courroie striée (15), le montage des flasques intermédiaires de séparation (4) et, éventuellement, des flasques d'extrémité (4f) s'opèrant par glissement au dessus du moyeu unique (3) grâce à leur alésage central (a), leur mise en place dans les rainures circonférentielles d'insertion (12) étant assurée par l'opération mécanique de solidarisation.

11. Procédé de réalisation de poulies à gorges multiples (1) selon la revendication 2, pour applications mixtes, permettant le montage dans deux gorges voisines (5t, 5p) d'une courroie de section trapézoïdale (18) pour l'entraînement d'un premier organe et d'une courroie plate pour l'entraînement d'un second organe, caractérisé en ce que l'usinage de la surface externe (6) du moyeu unique (3) permet la réalisation des rainures circonférentielles d'insertion (12) -aux emplacements prévus pour recevoir les flasques intermédiaires de séparation (4) qui présentent, entre une gorge (5t) et une gorge (5s) une forme de disque de profil semi-trapézoïdal, et, éventuellement, les flasques d'extrémité (4f) qui présentent une forme de disque plat à section rectangulaire lorsqu'ils limitent une gorge (5p) pour courroie plate et une forme de disque à profil semi-trapézoïdal lorsqu'ils limitent une gorge (5t) pour courroie de section trapézoïdale,- le montage des flasques intermédiaires de séparation (4) et, éventuellement, des flasques d'extrémité (4f) s'opèrant par glissement au dessus du moyeu unique (3) grâce à leur alésage central (a), leur mise en place dans les rainures circonférentielles d'insertion (12) étant assurée par l'opération mécanique de solidarisation.

12. Procédé de réalisation de poulies à gorges multiples (1) selon la revendication 2, pour applications mixtes, permettant le montage dans deux gorges voisines (51, 5t) d'une courroie striée (15) pour l'entraînement d'un premier organe et d'une courroie de section trapézoïdale (18) pour l'entraînement d'un second organe, caractérisé en ce que l'usinage de la surface externe (6) du moyeu unique (3) permet la réalisation simultanée des rainures circonférentielles d'insertion (12) -aux emplacements prévus pour recevoir les flasques intermédiaires de séparation (4) qui présentent, entre une gorge (5t) et une gorge (51) une forme de disque de profil semi-trapézoïdal, et, éventuellement, les flasques d'extrémité (4f) qui présentent une forme de disque plat à section rectangulaire lorsqu'ils limitent une gorge (51) pour courroie striée et une forme de disque à profil semi-trapézoïdal lorsqu'ils limitent une gorge (5t) pour courroie de section trapézoïdale,-et du profil circonférentiel (16) constitué de l'ensemble des gorges circonférentielles individuelles (17), en nombre correspondant au nombre de stries portées par la courroie striée (15), pour former le fond de gorge (9) de la gorge (51) de profil conjugué de celui de la face en regard de ladite courroie striée (15), le montage des flasques intermédiaires de séparation (4) et, éventuellement, des flasques d'extrémité (4f) s'opèrant par glissement au dessus du moyeu unique (3) grâce à leur alésage central (a), leur mise en place dans les rainures circonférentielles d'insertion (12) étant assurée par l'opération mécanique de solidarisation.

13. Procédé de réalisation de poulies à gorges multiples (1), selon l'une des revendications 1 à 12, caractérisé en ce que les flasques intermédiaires d'insertion (4) et, éventuellement, les flasques d'extrémité (4f) présentent une forme de disques ajourés, comportant des trous (21) ronds ou ovales ou des fentes (22), disposés au voisinage de leur alésage central (a)

## Patentansprüche

1. Verfahren zum Herstellen von drehbaren Teilen zur Leistungs-, Kraft- bzw. Bewegungsübertragung, die der Aufnahme von mindestens zwei endlosen, flexiblen Verbindungen dienen, bestehend aus einer alleinigen Nabe (3), die mit einer Anzahl von mittleren Trennscheiben (4) und äußeren Scheiben (4f), die der Anzahl der endlosen, flexiblen Verbindungen entspricht, sowie einer weiteren Scheibe versehen ist, wobei die Scheiben eine zentrale Bohrung (a) besitzen und wobei eine mittlere Trennscheibe (4) mit der benachbarten mittleren Trennscheibe (4) bzw. einer äußeren Scheibe (4f) und der Außenfläche (6) der alleinigen Nabe (3) eine Rille (5) bildet, die der Aufnahme einer endlosen, flexiblen Verbindung dient, wobei die genannten Scheiben in am Nabenumfang vorgesehenen Vertiefungen (12) angeordnet sind, die an der Außenfläche (6) der genannten alleinigen Nabe (3) eingearbeitet sind und deren Tiefe verglichen mit dem Außendurchmesser (De) der genannten alleinigen Nabe (3) gering ist, wobei der endgültige Durchmesser (da) der zentralen Bohrung (a) der genannten Scheiben (4) nach deren Anbringen geringer ist als der Außendurchmesser (De) der alleinigen Nabe (3), wobei das Verfahren dadurch gekennzeichnet ist, daß die mittleren Trennscheiben (4) aus einteiligen Platten angemessener Form bestehen und daß sie mit dem Grund der am Nabenumfang vorgesehenen Vertiefungen (12) durch eine radiale Querschnittsverminderung in einem maschinellen Verbindungsvorgang, der dazu dient, den ursprünglichen Durchmesser (di) ihrer zentralen Bohrung (a) zu verringern, fest verbunden werden.

2. Verfahren zum Herstellen von drehbaren Teilen zur Leistungs-, Kraft- bzw. Bewegungsübertragung nach Anspruch 1, die der Aufnahme von mindestens zwei endlosen, flexiblen Verbindungen dienen, dadurch gekennzeichnet, daß die genannten drehbaren Teile mehrrillige Riemenscheiben (1) sind und daß die genannten flexiblen Verbindungen gleichartige oder verschiedenartige flexible Riemen sind, wobei jede mittlere Trennscheibe (4) und gegebenenfalls die äußeren Scheiben (4f) mit dem Grund der am Nabenumfang vorgesehenen Vertiefungen (12) durch einen maschinellen Verbindungsvorgang fest verbunden werden.

3. Verfahren zum Herstellen von mehrrilligen Riemenscheiben (1) nach Anspruch 2, die dazu dienen, mit mindestens zwei Flachriemen betrieben zu werden, dadurch gekennzeichnet, daß jede mittlere Trennscheibe (4) und die äußeren Scheiben (4f) die Form flacher Platten von rechteckigem Querschnitt aufweisen, wobei deren Einbau mittels ihrer zentralen Bohrung (a) durch Aufschieben auf die alleinige Nabe (3) und deren Anbringung in den am Nabenumfang vorgesehenen Vertiefungen (12) durch den maschinellen Verbindungsvorgang erfolgen.

4. Verfahren zum Herstellen von mehrrilligen Riemenscheiben (1) nach Anspruch 2, die dazu dienen, mit mindestens zwei Keilriemen (18) betrieben zu werden, dadurch gekennzeichnet, daß jede mittlere Trennscheibe (4) die Form einer Platte mit Keilprofil aufweist, während die äußeren Scheiben (4f) jeweils die Form von Platten mit Halbkeilprofil aufweisen, wobei deren Einbau mittels ihrer zentralen Bohrung (a) durch Aufschieben auf die alleinige Nabe (3) und ihre Anbringung in den am Nabenumfang vorgesehenen Vertiefungen (12) durch den maschinellen Verbindungsvorgang erfolgen.

5. Verfahren zum Herstellen von mehrrilligen Riemenscheiben (1) nach Anspruch 2, die dazu dienen, mit mindestens zwei Zahnriemen (7) betrieben zu werden, dadurch gekennzeichnet, daß die Außenfläche (6) der alleinigen Nabe (3) vor dem Einarbeiten der am Nabenumfang vorgesehenen Vertiefungen (12) und dem Anbringen der mittleren Trennscheiben (4) sowie der äußeren Scheiben (4f) gefräst wird, um am Rillengrund (9) der Rillen (5) eine Längsverzahnung herzustellen, die Zähne (10) und Zahnlücken (11) aufweist, wodurch der Außenfläche (6) der genannten alleinigen Nabe (3) in der genannten Rille (5) ein Rillengrundprofil (14) verliehen wird, das dem Profil der gegenüberliegenden Fläche des einzubauenden Zahnriemens (7) entspricht, sowie dadurch, daß der ursprüngliche Durchmesser (di) der zentralen Bohrung (a) der einzelnen mittleren Trennscheiben (4) und der äußeren Scheiben (4f), die die Form flacher Platten von rechteckigem Querschnitt aufweisen, durch den maschinellen Verbindungsvorgang, der auf ihre Anbringung in den am Nabenumfang vorgesehenen Vertiefungen (12) folgt, auf einen endgültigen Durchmesser (da) reduziert wird, dessen Wert geringer ist als der Durchmesser (Df) der alleinigen Nabe (3), gemessen am Grund der Zwischenräume zweier einander diametral gegenüberliegender Zähne (11).

6. Verfahren zum Herstellen von mehrrilligen Riemenscheiben (1) nach Anspruch 2, die dem Betrieb mit mindestens zwei Keilrippenriemen dienen, dadurch gekennzeichnet, daß die Bearbeitung der Außenfläche (6) der alleinigen Nabe (3) die gleichzeitige Ausführung der am Nabenumfang vorgesehenen Vertiefungen (12), die der Anbringung der mittleren Trennscheiben (4) und gegebenenfalls der äußeren Scheiben (4f) dienen, wobei die Scheiben (4, 4f) die Form flacher Platten von rechteckigem Querschnitt aufweisen, sowie des Nabenumfangsprofils (16), bestehend aus der Gesamtheit der einzelnen am Nabenumfang vorgesehenen Rillen (17), zuläßt, deren Anzahl der Zahl der Rippen des Keilrippenriemens (15) entspricht, wodurch der Rillengrund (9) der Rille (51) hergestellt wird, dessen Profil dem Profil der gegenüberliegenden Fläche des genannten Keilrippenriemens (15) entspricht, wobei der Einbau der mittleren Trennscheiben (4) und gegebenenfalls der äußeren Scheiben (4f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

7. Verfahren zum Herstellen von mehrrilligen Riemenscheiben (1) nach Anspruch 2 für gemischte Anwendungen, wobei der Einbau eines Zahnriemens (7) zur Verriegelung eines ersten Organs sowie eines Flachriemens zum Antrieb eines zweiten Organs in zwei nebeneinanderliegenden Rillen (5s, 5p) ermöglicht wird, dadurch gekennzeichnet, daß die Fräsung der Außenfläche (6) der alleinigen Nabe (3) auf den Bereich (S) der genannten Außenfläche (6) begrenzt ist, wodurch der Rillengrund (9) der Rille (5s) hergestellt wird, dessen Profil dem Profil der gegenüberliegenden Fläche des Zahnriemens (7) entspricht, während der andere Teil (NF) der Außenfläche (6) der alleinigen Nabe (3) im ursprünglichen Zustand belassen wird, sowie dadurch, daß die genannte Fräsung von der Ausführung der am Nabenumfang vorgesehenen Vertiefungen (12) an den Stellen gefolgt ist, die für die Aufnahme der mittleren Trennscheiben (4) und gegebenenfalls der äußeren Scheiben (4f) vorgesehen sind, die die Form flacher Platten von rechteckigem Querschnitt aufweisen, wobei deren Einbau durch Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

8. Verfahren zum Herstellen von mehrrilligen Riemenscheiben (1) nach Anspruch 2 für gemischte Anwendungen, wobei der Einbau eines Zahnriemens (7) zur Verriegelung eines ersten Organs sowie eines Keilrippenriemens zum Antrieb eines zweiten Organs in zwei nebeneinanderliegenden Rillen (5s, 5p) ermöglicht wird, dadurch gekennzeichnet, daß die Fräsung der Außenfläche (6) der alleinigen Nabe (3) auf den Bereich (S) der genannten Außenfläche (6) begrenzt ist, wodurch der Rillengrund (9) der Rille (5s) hergestellt wird, dessen Profil dem Profil der gegenüberliegenden Fläche des Zahnriemens (7) entspricht, sowie dadurch, daß die genannte Fräsung von der gleichzeitigen Ausführung der am Nabenumfang vorgesehenen Vertiefungen (12) an den Stellen, die für die Aufnahme der mittleren Trennscheiben (4) und gegebenenfalls der äußeren Scheiben (4f) vorgesehen sind, die die Form flacher Platten von rechteckigem Querschnitt aufweisen, sowie des Nabenumfangsprofils (16) gefolgt ist, das aus der Gesamtheit der einzelnen am Nabenumfang vorgesehenen Rillen (17) besteht, deren Anzahl der Zahl der Rippen des Keilrippenriemens (15) entspricht, wodurch der Rillengrund (9) der Rille (51) hergestellt wird, dessen Profil dem Profil der gegenüberliegenden Fläche des genannten Keilrippenriemens (15) entspricht, wobei der Einbau der einzelnen mittleren Trennscheiben (4) und gegebenenfalls der äußeren Scheiben (4f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

9. Verfahren zum Herstellen von mehrrilligen Riemenscheiben (1) nach Anspruch 2 für gemischte Anwendungen, wobei der Einbau eines Zahnriemens (7) zur Verriegelung eines ersten Organs sowie eines Keilriemens (18) zum Antrieb eines zweiten Organs in zwei nebeneinanderliegenden Rillen (5s, 5t) ermöglicht wird, dadurch gekennzeichnet, daß die Fräsung der Außenfläche (6) der alleinigen Nabe (3) auf den Bereich (S) der genannten Außenfläche (6) begrenzt ist, wodurch der Rillengrund (9) der Rille (5s) hergestellt wird, dessen Profil dem Profil der gegenüberliegenden Fläche des Zahnriemens (7) entspricht, sowie dadurch, daß die genannte Fräsung von der Ausführung der am Nabenumfang vorgesehenen Vertiefungen (12) an den Stellen gefolgt ist, die für die Aufnahme der mittleren Trennscheibe (4), die die Form einer Platte von halbkeilförmigem Querschnitt aufweist, und gegebenenfalls der äußeren Scheiben vorgesehen sind, nämlich (4f), die das freie Ende der mehrrilligen Riemenscheibe (1) auf der Seite der Rille (5s) begrenzt und die Form einer flachen Platte von rechteckigem Querschnitt aufweist, bzw. (4'f), die das freie Ende der mehrrilligen Riemenscheibe auf der Seite der Rille (5t) begrenzt, wobei der Einbau der mittleren Trennscheibe (4) und gegebenenfalls der äußeren Scheiben (4f, 4'f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

10. Verfahren zum Herstellen von mehrrilligen Riemenscheiben (1) nach Anspruch 2 für gemischte Anwendungen, wobei der Einbau eines Keilrippenriemens (15) zum Antrieb eines ersten Organs sowie eines Flachriemens zum Antrieb eines zweiten Organs in zwei nebeneinanderliegenden Rillen (51, 5p) ermöglicht wird, dadurch gekennzeichnet, daß die Bearbeitung der Außenfläche (6) der alleinigen Nabe (3) die gleichzeitige Ausführung der am Nabenumfang vorgesehenen Vertiefungen (12) an den für die Aufnahme der mittleren Trennscheiben (4) vorgesehenen Stellen und gegebenenfalls der äußeren Scheiben (4f), die die Form flacher Platten von rechteckigem Querschnitt aufweisen, sowie des Nabenumfangsprofils (16), bestehend aus der Gesamtheit der einzelnen am Nabenumfang vorgesehenen Rillen (17), zuläßt, deren Anzahl der Zahl der Rippen des Keilrippenriemens (15) entspricht, wodurch der Rillengrund (9) der Rille (51) hergestellt wird, dessen Profil dem Profil der gegenüberliegenden Fläche des genannten Keilrippenriemens (15) entspricht, wobei der Einbau der mittleren Trennscheiben (4) und gegebenenfalls der äußeren Scheiben (4f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

11. Verfahren zum Herstellen von mehrrilligen Riemenscheiben (1) nach Anspruch 2 für gemischte Anwendungen, wobei der Einbau eines Keilriemens (18) zum Antrieb eines ersten Organs sowie eines Flachriemens zum Antrieb eines zweiten Organs in zwei nebeneinanderliegenden Rillen (5t, 5p) ermöglicht wird, dadurch gekennzeichnet, daß die Bearbeitung der Außenfläche (6) der alleinigen Nabe (3) die Ausführung der am Nabenumfang vorgesehenen Vertiefungen (12) an den Stellen zuläßt, die für die Aufnahme der mittleren Trennscheiben (4), die zwischen einer Rille (5t) und einer Rille (5s) die Form von Platten von halbkeilförmigem Profil haben, sowie gegebenenfalls der äußeren Scheiben (4f) vorgesehen sind, die die Form flacher Platten von rechteckigem Querschnitt aufweisen, wenn sie eine Rille (5p) für Flachriemen begrenzen, bzw. die Form von Platten von halbkeilförmigem Profil, wenn sie eine Rille (5t) für Keilriemen begrenzen, wobei der Einbau der mittleren Trennscheiben (4) und gegebenenfalls der äußeren Scheiben (4f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

12. Verfahren zum Herstellen von mehrrilligen Riemenscheiben (1) nach Anspruch 2 für gemischte Anwendungen, wobei der Einbau eines Keilrippenriemens (15) zum Antrieb eines ersten Organs sowie eines Keilriemens (18) zum Antrieb eines zweiten Organs in zwei nebeneinanderliegenden Rillen (51, 5t) ermöglicht wird, dadurch gekennzeichnet, daß die Bearbeitung der Außenfläche (6) der alleinigen Nabe (3) die gleichzeitige Ausführung der am Nabenumfang vorgesehenen Vertiefungen (12) an den Stellen, die zur Aufnahme der mittleren Trennscheiben (4), die zwischen einer Rille (5t) und einer Rille (51) die Form von Platten von halbkeilförmigem Profil aufweisen, sowie gegebenenfalls der äußeren Scheiben (4f) vorgesehen sind, die die Form flacher Platten von rechteckigem Querschnitt aufweisen, wenn sie eine Rille (51) für Keilrippenriemen begrenzen, und die Form von Platten von halbkeilförmigem Profil, wenn sie eine Rille (5t) für Keilriemen begrenzen, sowie des Nabenumfangsprofils (16), bestehend aus der Gesamtheit der einzelnen am Nabenumfang vorgesehenen Rillen (17), zuläßt, deren Anzahl der Zahl der Rippen des Keilrippenriemens (15) entspricht, wodurch der Rillengrund (9) der Rille (51) hergestellt wird, dessen Profil dem Profil der gegenüberliegenden Fläche des genannten Keilrippenriemens (15) entspricht, wobei der Einbau der mittleren Trennscheiben (4) und gegebenenfalls der äußeren Scheiben (4f) durch deren Aufschieben auf die alleinige Nabe (3) mittels ihrer zentralen Bohrung (a) und ihre Anbringung in den am Nabenumfang vorgesehenen Vertiefungen (12) durch den maschinellen Verbindungsvorgang erfolgen.

13. Verfahren zum Herstellen von mehrrilligen Riemenscheiben (1) nach einem der Ansprüche 1 bis 12, dadurch gekennzeichnet, daß die mittleren Trennscheiben (4) und gegebenenfalls die äußeren Scheiben (4f) die Form von durchbrochenen Platten mit runden oder ovalen Löchern (21) bzw. Schlitzen (22), die um ihre zentrale Bohrung (a) herum vorgesehen sind, aufweisen.

## Claims

1. Process for the production of rotary members for power, strength or motion drive, designed to receive at least two endless flexible links and comprising a only rim (3) provided with separating intermediate flanges (4) and limiting end flanges (4f), the total number of said flanges being equal to the number of endless flexible links increased by one, each flange having a central bore (a), each separating intermediate flange (4) defining with the neighbouring separating intermediate flange (4) or with a limiting end flange (4f) and the external face (6) of the only rim (3) a groove (5) for receiving one of the endless flexible links, said flanges being set up into circumferential inserting scores (12) grooved in the external face (6) of said only rim (3) and the depth of which being small in comparison with the external diameter (De) of said only rim (3), the final diameter (da) of the central bore (a) of said flanges (4) becoming smaller than the external diameter (De) of the only rim (3) after said flanges have been set up into place, said process being characterised in that the separating intermediate flanges (4) are single unit disks having a suitable shape and in that they are bound to the bottom of the circumferential inserting scores (12) by a radial hammering, a mechanical interlocking operation which reduces the initial diameter (di ) of their central bore (a).

2. Process for the production of rotary members for power, strength or motion drive, designed to receive at least two endless flexible links according to Claim 1, characterised in that said rotary members are multigroove pulleys (1) and in that said flexible links are flexible belts of an identical type or of different types, each of the separating intermediate flange (4) and possibly the limiting end flanges (4f) being bound to the bottom of each of the circumferential inserting scores (12) by a mechanical interlocking operation.

3. Process for the production of multigroove pulleys (1) according to Claim 2, designed to operate with at least two flat belts, characterised in that each of the separating intermediate flanges (4) and of the limiting end flanges (4f) has the shape of a flat disk having a rectangular section, their assembly being made by sliding over the only rim (3) through their central bore (a), their setting up into the circumferential inserting scores (12) being performed by the mechanical interlocking operation.

4. Process for the production of multigroove pulleys (1) according to Claim 2, designed to operate with at least two V-belts (18), characterised in that each of the separating intermediate flanges (4) has the shape of a disk with a trapezoidal section, the limiting end flanges (4f) having a half trapezoidal section, their assembly being made by sliding over the only rim (3) through their central bore (a), their setting up into the circumferential inserting scores (12) being performed by the mechanical interlocking operation.

5. Process for the production of multigroove pulleys (1) according to Claim 2, designed to operate with at least two toothed belts (7), characterised in that the external face (6) of the only rim (3) is milled - before machining for forming the circumferential inserting scores (12) and before setting up each of the separating intermediate flanges (4) and of the limiting end flanges (4f) - to form a series of longitudinal notches in the bottom (9) of each of the grooves (5), said longitudinal notches having embossed parts of teeth (10) and hollow parts of teeth (11), so giving to the external face (6) of the only rim (3) in said groove (5) a profile of the bottom of the groove (14) which matches the profile of the corresponding facing face of the tooth belt (7) which will be assembled thereto and in that the initial diameter (di) of the central bore (a) of each of the separating intermediate flanges (4) and of the limiting end flanges (4f) which have the shape of a flat disk having a rectangular section is reduced by the mechanical interlocking operation following their setting up into the circumferential inserting scores (12) to a final diameter (da) which is smaller than that of the diameter (Df) of the only rim (3) when measured at the bottom of the hollow part (11) of two diametrically opposite teeth.

6. Process for the production of multigroove pulleys (1) according to Claim 2, designed to operate with at least two grooved belts, characterised in that machining of the external face (6) of the only rim (3) allows simultaneous grooving of circumferential inserting scores (12) - designed to set up in place each of the separating intermediate flanges (4) and possibly of the limiting end flanges (4f), said flanges (4, 4f) having the shape of a flat disk with a rectangular section - and of the circumferential profile (16) consisting of the series of individual circumferential scores (17), - the number of which matches the number of grooves on the grooved belts (15) - in order to define the bottom of the groove (9) of the pulley groove (51), the profile of which corresponds to that of the facing face of said grooved belts (15), the assembly of each of the separating intermediate flanges (4) and possibly of the limiting end flanges (4f) being made by sliding over the only rim (3) through their central bore (a), their setting up into the circumferential inserting scores (12) being performed by the mechanical interlocking operation.

7. Process for the production of multigroove pulleys (1) according to Claim 2, designed for mixed uses allowing to set up into two neighbouring grooves (5s, 5p) a toothed belt (7) for exactly driving a first device and a flat belt for driving a second device, characterised in that milling of the external face (6) of the only rim (3) is only performed on the limited area (S) of said external face (6) in order to define the bottom (9) of the groove (5s), the profile of which matches that of the corresponding facing face of the toothed belt (7), the other area (NF) of the external face (6) of the only rim (3) being maintained in its original state, and in that said milling is followed by machining of circumferential inserting scores (12) at places expected to receive each of the separating intermediate flanges (4) and possibly of the limiting end flanges (4f) which have the shape of a flat disk with a rectangular section, their assembly being made by sliding over the only rim (3) through their central bore (a), their setting up into the circumferential inserting scores (12) being performed by the mechanical interlocking operation.

8. Process for the production of multigroove pulleys (1) according to Claim 2, designed for mixed uses allowing to set up into two neighbouring grooves (5s, 5p) a toothed belt (7) for exactly driving a first device and a grooved belt for driving a second device, characterised in that milling of the external face (6) of the only rim (3) is only performed on the limited area (S) of said external face (6) in order to define the bottom (9) of the groove (5s), the profile of which matches that of the corresponding facing face of the toothed belt (7) and in that said milling is followed by simultaneous machining of circumferential inserting scores (12) - at places expected to receive each of the separating intermediate flanges (4) and possibly of the limiting end flanges (4f) which have the shape of a flat disk with a rectangular section - and of the circumferential profile (16) consisting in a series of individual circumferential scores (17), the number of which corresponds to the number of grooves on the grooved belt (15), in order to define the bottom (9) of the groove (51), the profile of which matching that of the corresponding facing face of said grooved belt (15), the assembly of each of the separating intermediate flanges (4) and possibly of the limiting end flanges (4f) being made by sliding over the only rim (3) through their central bore (a), their setting up into the circumferential inserting scores (12) being performed by the mechanical interlocking operation.

9. Process for the production of multigroove pulleys (1) according to Claim 2, designed for mixed uses allowing to set up into two neighbouring grooves (5s, 5t) a toothed belt (7) for exactly driving a first device and a V-belt (18) for driving a second device, characterised in that the milling of the external face (6) of the only rim (3) is only performed on the limited area (S) of said external face (6) in order to define the bottom (9) of the groove (5s), the profile of which matches that of the corresponding facing face of the toothed belt (7) and in that said milling is followed by machining of circumferential inserting scores (12) - at places expected to receive the separating intermediate flange (4) which has the shape of a disk with a half trapezoidal section and possibly the limiting end flanges (4f), one limiting the free end of the multigroove pulley (1) on the side of the groove (5s) and has the shape of a flat disk with a rectangular section and the other (4'f) limiting the free end of the multigroove pulley (1) on the side of the groove (5t) - the assembly of the separating intermediate flange (4) and possibly of the limiting end flanges (4f, 4'f) being made by sliding over the only rim (3) through their central bore (a), their setting up into the circumferential inserting scores (12) being performed by the mechanical interlocking operation.

10. Process for the production of multigroove pulleys (1) according to Claim 2, designed for mixed uses allowing to set up into two neighbouring grooves (51, 5p) a grooved belt (15) for driving a first device and a flat belt for driving a second device, characterised in that machining of the external face (6) of the only rim (3) allows simultaneous grooving of circumferential inserting scores (12) - at places expected to receive each of the separating intermediate flanges (4) and possibly of the limiting end flanges (4f) which have the shape of a flat disk with a rectangular section - and that of the circumferential profile (16) consisting in a series of individual circumferential scores (17), the number of which corresponds to the number of grooves on the grooved belt (15), in order to define the bottom (9) of the groove (51), the profile of which matching that of the corresponding facing face of said grooved belt (15), the assembly of each of the separating intermediate flanges (4) and possibly of the limiting end flanges (4f) being made by sliding over the only rim (3) through their central bore (a), their setting up into the circumferential inserting scores (12) being performed by the mechanical interlocking operation.

11. Process for the production of multigroove pulleys (1) according to Claim 2, designed for mixed uses allowing to set up into two neighbouring grooves (5t, 5p) a V-belt (18) for driving a first device and a flat belt for driving a second device, characterised in that machining of the external face (6) of the only rim (3) allows grooving of circumferential inserting scores (12) - at places expected to receive the separating intermediate flanges (4) which have, between a groove (5t) and a groove (5s) the shape of a disk with a half trapezoidal section and possibly the limiting end flanges (4f) having the shape of a flat disk with a rectangular section when they limit a groove (5p) for a flat belt and the shape of a disk with a half trapezoidal section when they limit a groove (5t) for a V-belt - the assembly of the separating intermediate flanges (4) and possibly of the limiting end flanges (4f) being made by sliding over the only rim (3) through their central bore (a), their setting up into the circumferential inserting scores (12) being performed by the mechanical interlocking operation.

12. Process for the production of multigroove pulleys (1) according to Claim 2, designed for mixed uses allowing to set up into two neighbouring grooves (51, 5t) a grooved belt (15) for driving a first device and a V-belt (18) for driving a second device, characterised in that machining of the external face (6) of the only rim (3) allows simultaneous grooving of circumferential inserting scores (12) - at places expected to receive the separating intermediate flanges (4) which have, between a groove (5t) and a groove (51) the shape of a disk with a half trapezoidal section and possibly the limiting end flanges (4f) having the shape of a flat disk with a rectangular section when they limit a groove (51) for a grooved belt and the shape of a disk with a half trapezoidal section when they limit a groove (5t) for a V-belt - and that of the circumferential profile (16) consisting of a series of individual circumferential scores (17), the number of which corresponds to the number of grooves on the grooved belt (15) in order to define the bottom (9) of the groove (51) the profile of which matches that of the corresponding facing face of the grooved belt (15), the assembly of the separating intermediate flanges (4) and possibly of the limiting end flanges (4f) being made by sliding over the only rim (3) through their central bore (a), their setting up into the circumferential inserting scores (12) being performed by the mechanical interlocking operation.

13. Process for the production of multigroove pulleys (1) according to one of Claims 1 to 12, characterised in that the separating intermediate flanges (4) and possibly the limiting end flanges (4f) have the shape of a perforated disk with round or oval holes (21) or slots (22) placed in the vicinity of the central bore (a).
